# DEMANDE DE BREVET EUROPEEN

(11) **EP 4 385 834 A1**
(43) Date de publication de la demande: **19.06.2024**
(21) Numéro de dépôt: 23215379.1
(22) Date de dépôt: 08.12.2023
(51) Int. Cl.: B60R 22/24, B60R 22/34

(54) **DISPOSITIF DE SUPPORT POUR UN ENROULEUR DE CEINTURE D'UN VÉHICULE AUTOMOBILE**

(30) Priorité: 16.12.2022 FR 2213533
(71) Demandeur: Renault s.a.s, 92100 Boulogne Billancourt (FR)
(72) Inventeur: BRILHAC, Vincent, 78280 GUYANCOURT (FR); CABRAL, Guillaume, 78280 GUYANCOURT (FR); DEPRIESTER, Mathieu, 78280 GUYANCOURT (FR)

(57) **Abrégé**

Dispositif de support (1) pour un enrouleur de ceinture (2) d'un véhicule automobile, comprenant un support (14) configuré pour être fixé à la structure du véhicule et une plaque de renfort (6) fixée sur le support (14), la plaque de renfort (6) étant configurée pour assurer la fixation de l'enrouleur de ceinture (2) et d'un fil de gâche (4).

## Description

La présente invention se rapporte au domaine des enrouleurs de ceinture, notamment de véhicules automobiles, et plus particulièrement au domaine des éléments de structure de ces véhicules automobiles configurés pour supporter ces enrouleurs de ceinture.

Les véhicules sont équipés de ceintures de sécurité pour assurer la sécurité des passagers lors d'un accident ou d'un choc, en les maintenant assis au mieux à leur siège grâce aux sangles qu'ils comprennent. Les ceintures de sécurité comportent cette sangle et un enrouleur de ceinture, fixé sur un élément de structure du véhicule et qui est configuré d'une part pour laisser se dérouler la sangle lorsque le passager souhaite accrocher sa ceinture et d'autre part pour bloquer la sangle et retenir le passager en cas d'accident. Selon la position qui est donnée à l'enrouleur de ceinture une fois fixé sur l'élément de structure du véhicule, la ceinture de sécurité peut comporter également un renvoi de sangle qui permet de tendre la sangle de manière appropriée pour assurer la retenue du passager.

Concernant les ceintures de sécurité disposées à l'arrière du véhicule, il est connu de disposer les enrouleurs de ceinture directement sur un élément de structure du véhicule tel que le pied arrière ou la doublure de custode, ou bien de les fixer sur un support intermédiaire soudé sur l'un et/ou l'autre de ces éléments de structure. On comprend que le volume des enrouleurs de ceinture est incompressible et que l'orientation de ces enrouleurs une fois fixés sur le véhicule doit permettre le bon fonctionnement de la ceinture de sécurité et notamment le blocage de la ceinture en cas de chocs.

Le positionnement des enrouleurs de ceinture est ainsi contraint et il convient de trouver des formes et des dimensions des supports intermédiaires qui permettent un positionnement optimal dans le contexte d'intégration d'autres composants du véhicule parmi lesquels une banquette arrière, ou des sièges arrière, et des fils de gâche permettant l'ancrage du dossier de cette banquette ou de ces sièges.

La présente invention s'inscrit dans ce contexte et a pour principal objet un dispositif de support pour un enrouleur de ceinture d'un véhicule automobile, comprenant un support configuré pour être fixé à la structure du véhicule et une plaque de renfort fixée sur le support, la plaque de renfort étant configurée pour assurer la fixation de l'enrouleur de ceinture et un fil de gâche.

Le dispositif de support selon l'invention est destiné à équiper un véhicule automobile et présente la particularité d'avoir un ensemble solidaire formé de l'association d'une plaque de renfort et d'un support. Cet ensemble solidaire permet de fixer, sur la structure du véhicule, deux composants distincts, à savoir un enrouleur de ceinture et un fil de gâche et cela permet d'assurer la fixation de ces deux pièces dans un encombrement réduit et en diminuant le nombre de pièces distinctes nécessaires à leur fixation, ce qui représente un gain dans le procédé assemblage du véhicule.

La présente invention vise ainsi à proposer une solution permettant d'avoir un dispositif de support compact pour un véhicule automobile, avec un support d'un enrouleur de ceinture et d'un fil de gâche qui est associé à une plaque de renfort fixée à ce support et sur lequel sont directement fixés l'enrouleur et le fil de gâche. La plaque de renfort permet d'améliorer la résistance et la tenue de l'enrouleur de ceinture et du fil de gâche. Par ailleurs, le dispositif de support selon l'invention est configuré, notamment avec la plaque de renfort à fixer sur le support, pour permettre une étape de réglage simplifié de la position du fil de gâche, notamment de la portion d'accroche par rapport à l'interface du dossier de siège. Cette étape de réglage de la position fait suite à la fixation du fil de gâche sur la plaque de renfort et elle est mise en oeuvre par des ajustements de la position de la plaque de renfort par rapport au support, cette plaque de renfort n'étant fixée définitivement sur le support que dans un deuxième temps, par une étape de soudage appropriée.

Selon une caractéristique optionnelle de l'invention, la plaque de renfort comprend une première face, plaquée contre une face du support, et une deuxième face opposée à la première face, l'enrouleur de ceinture étant plaquée contre la deuxième face et le fil de gâche étant fixé sur cette deuxième face de la plaque de renfort.

En d'autres termes, la plaque de renfort est interposée entre l'enrouleur de ceinture et le support et le fil de gâche est soudé sur cette plaque de renfort, au niveau de portions de fixation disposées du côté du support où est située la plaque de renfort. Ainsi, la plaque de renfort assure une fonction de rigidification du support notamment au niveau de l'enrouleur de ceinture et elle assure une fonction de fixation du fil de gâche.

Dans un encombrement réduit, la plaque de renfort permet d'optimiser la tenue aux efforts de l'enrouleur de ceinture et du fil de gâche.

Selon une caractéristique optionnelle de l'invention, la plaque de renfort et le support comprennent tous deux une première fenêtre de passage pour le passage du fil de gâche.

Le fil de gâche a pour fonction d'accrocher le dossier d'un élément d'assise comme un siège ou une banquette. Il est ainsi nécessaire d'avoir une portion d'accroche du fil de gâche qui s'étende à l'avant du support pour coopérer avec un crochet de verrouillage de l'élément d'assise, alors que le fil de gâche est fixé sur la plaque de renfort disposée à l'arrière du support. La première fenêtre de passage permet au fil de gâche de traverser le dispositif de support, à savoir à la fois la plaque de renfort et le support, pour réaliser ces deux fonctions. Le cas échéant, la première fenêtre de passage formée sur le support est de dimensions plus importantes que celles de la première fenêtre de passage formée sur la plaque de renfort. De la sorte, on s'assure que le fil de gâche peut se déplacer au sein de la première fenêtre de passage du support lorsque la position du fil de gâche est réglée par ajustement de la position de la plaque de renfort, sur lequel est soudé le fil de gâche, contre le support.

Selon une caractéristique optionnelle de l'invention, le fil de gâche comprend d'une part une portion centrale d'accroche d'un élément d'assise du véhicule, s'étendant d'un côté du support, et d'autre part des portions de fixation au dispositif de support formée par des doigts prolongeant la portion centrale d'accroche et s'étendant de l'autre côté du support.

Selon une caractéristique optionnelle de l'invention, la plaque de renfort est soudée sur le support, et la plaque de renfort et le support comportent des trous de positionnement configurés pour recevoir des rivets glissants. On comprend de cette double caractéristique que la plaque de renfort est montée dans un premier temps sur le support en étant tenu par des rivets glissants qui traversent les trous de positionnement, le ou les trous de positionnement formés sur la plaque de renfort étant oblongs pour permettre un ajustement de la position de la plaque de renfort par rapport au support avant de figer cette position par une opération de soudage. Cet ajustement de la position de la plaque de renfort par rapport au support, avec le fil de gâche qui est soudé sur la plaque de renfort au préalable, permet de positionner correctement le fil de gâche dans l'habitacle, pour qu'il puisse coopérer avec un crochet de verrouillage porté par le dossier du siège ou de la banquette arrière à fixer, par des opérations simples de déplacement de la plaque de renfort contre le support sur lequel elle est soudée dans un deuxième temps.

Selon une caractéristique optionnelle de l'invention, le support et la plaque de renfort comportent chacun un orifice de fixation permettant le passage d'une vis de fixation de l'enrouleur de ceinture.

Selon une caractéristique optionnelle de l'invention, le support et la plaque de renfort comportent en outre chacun au moins un orifice de pré-assemblage, configuré pour coopérer avec un crochet porté par l'enrouleur de ceinture. On comprend que l'enrouleur de ceinture est préassemblé sur le dispositif de support, et qu'il est fixé par vissage dans un deuxième temps.

Selon une caractéristique optionnelle de l'invention, l'orifice de fixation est disposé à l'intérieur d'une projection orthogonale du fil de gâche sur une face du support. De la sorte, la vis de fixation destinée à venir dans cet orifice de fixation est libre d'accès et un opérateur peut amener sans gêne la tête d'une visseuse pour fixer l'enrouleur de ceinture à la plaque de renfort.

Selon une caractéristique optionnelle de l'invention, le support comprend une deuxième fenêtre de passage configurée pour laisser passer une sangle associée à l'enrouleur de ceinture.

L'enrouleur de ceinture est configuré pour permettre le déploiement d'une sangle, la sangle ayant pour but de maintenir au mieux le passager sur son siège, afin de préserver sa sécurité lors d'un choc ou d'un accident en le maintenant en place. On comprend que la sangle doit traverser le dispositif de support pour s'étendre à l'avant du dispositif de support et être accessible pour le passager. Il est notable selon cette caractéristique que seul le support comprend une deuxième fenêtre de passage, de sorte que la plaque de renfort ne s'étend pas en recouvrement de cette portion du support. On limite ainsi la dimension de la plaque de renfort à ce qui est strictement nécessaire, à savoir assurer une zone de fixation pour le fil de gâche et être interposé entre l'enrouleur de ceinture et le support.

Selon une caractéristique optionnelle de l'invention, la plaque de renfort présente une épaisseur équivalente à l'épaisseur du support. Plus particulièrement, la plaque de renfort est réalisée dans le même matériau et présente la même épaisseur que le support. Le fait d'avoir le même matériau simplifie les opérations de soudage de la plaque de renfort sur le support et l'épaisseur équivalente permet de générer une surépaisseur locale sans pour autant imposer des contraintes trop importantes sur le support.

L'invention concerne également un véhicule automobile comprenant au moins un dispositif de support tel que précédemment caractérisé.

Selon une caractéristique de l'invention, un premier dispositif de support est disposé dans une partie gauche du véhicule et un second dispositif de support est disposé dans une partie droite du véhicule, la plaque de renfort utilisée dans le premier dispositif de support étant identique à la plaque de renfort utilisée dans le deuxième dispositif de support.

En d'autres termes, il est possible d'équiper les deux dispositifs de support, nécessaires à l'accroche des éléments d'assise et à la fixation d'un enrouleur de ceinture de chaque côté du véhicule, avec une unique référence de pièce de renfort, cette pièce de renfort pouvant être pivotée afin de la rendre applicable pour la partie gauche ou droite d'un véhicule.

L'invention concerne également un procédé de montage dans un véhicule automobile d'un dispositif de support tel que précédemment évoqué, comprenant au moins les étapes suivantes parmi lesquelles une étape de soudage de doigts du fil de gâche sur une première face de la plaque de renfort, une étape de positionnement de la deuxième face opposée de la plaque de renfort contre une face du support au cours de laquelle le fil de gâche est passé à travers une première fenêtre de passage formée sur le support, une étape de réglage de la position du fil de gâche par ajustement glissant de la position de la plaque de renfort contre le support, une étape de fixation de la plaque de renfort sur le support par soudage et une étape de fixation par vissage de l'enrouleur de ceinture sur le dispositif de support, la plaque de renfort étant interposée entre l'enrouleur et le support.

Certaines de ces étapes doivent être réalisées après d'autres, comme les étapes successives de pré-assemblage et de vissage de l'enrouleur qui doivent être réalisées après l'étape de fixation par soudure du fil de gâche, notamment pour permettre une opération de soudage simplifiée.

D'autres étapes peuvent être réalisées dans un ordre quelconque, comme par exemple l'étape de fixation par soudure du fil de gâche sur la plaque de renfort, qui peut être mis en oeuvre avant le positionnement de la plaque de renfort sur le support. En d'autres termes, soit le fil de gâche est rendu solidaire de la plaque de renfort et la plaque de renfort est ensuite positionnée contre le support en insérant le fil de gâche dans la première fenêtre de passage formée sur le support, soit la plaque de renfort est positionnée contre le support et le fil de gâche est inséré dans la première fenêtre de passage pour être ensuite soudé sur la plaque de renfort.

D'autres caractéristiques, détails et avantages de l'invention ressortiront plus clairement à la lecture de la description d'un mode de réalisation détaillé qui suit, donné à titre indicatif et non limitatif en référence aux dessins schématiques annexés, sur lesquels :
[Fig. 1] illustre l'arrière d'un véhicule automobile équipé d'un dispositif de support conforme à l'invention, la figure 1 rendant visible au niveau de ce dispositif de support une sangle d'une ceinture de sécurité et un fil de gâche ;
[Fig. 2] illustre le dispositif de support de la figure 1 vue de l'avant, la sangle de la ceinture de sécurité ayant été ici retirée ;
[Fig. 3] illustre, en perspective, le dispositif de support de la figure 1 vue de l'arrière, pour rendre visible un renfort commun à un enrouleur de ceinture ici non représenté et au fil de gâche ;
[Fig. 4] illustre le dispositif de support de la figure vue de l'arrière, selon un autre angle de perspective et avec cette fois l'enrouleur de ceinture ; et
[Fig. 5] illustre une étape d'assemblage de l'enrouleur de ceinture sur le dispositif de support de la figure 1 ;
[Fig. 6] illustre une autre étape d'assemblage de l'enrouleur de ceinture sur le dispositif de support de la figure 1, faisant suite à l'étape illustrée sur la figure 5.

Il convient de noter que, dans la description détaillée de modes de réalisation qui va suivre de même que dans le reste du document, les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieure.

Dans la description détaillée qui va suivre, les dénominations « longitudinale », « verticale » et « transversale » se réfèrent à l'orientation du véhicule dans lequel des éléments de l'invention prennent place. Une direction longitudinale correspond à une direction dans laquelle s'inscrit l'axe d'allongement principal du véhicule et sa direction principale d'avancement, cette direction longitudinale étant parallèle à un axe longitudinal L d'un repère L, V, T illustré sur les figures. Une direction verticale correspond à une direction perpendiculaire au sol sur lequel repose le véhicule équipé du dispositif de support et l'axe vertical V correspondant est perpendiculaire à l'axe longitudinal L. Enfin, une direction transversale correspond à une direction parallèle à un axe transversal T du repère L, V, T, cet axe transversal T étant perpendiculaire à l'axe longitudinal L et à l'axe vertical V.

Pour rappel, l'invention concerne un dispositif de support 1 pour un enrouleur de ceinture 2 et pour un fil de gâche 4, dans lequel un support est configuré pour être fixé sur un élément de structure d'un véhicule automobile et pour recevoir une plaque de renfort 6 commune aux deux éléments distincts que sont l'enrouleur de ceinture 2 et le fil de gâche 4.

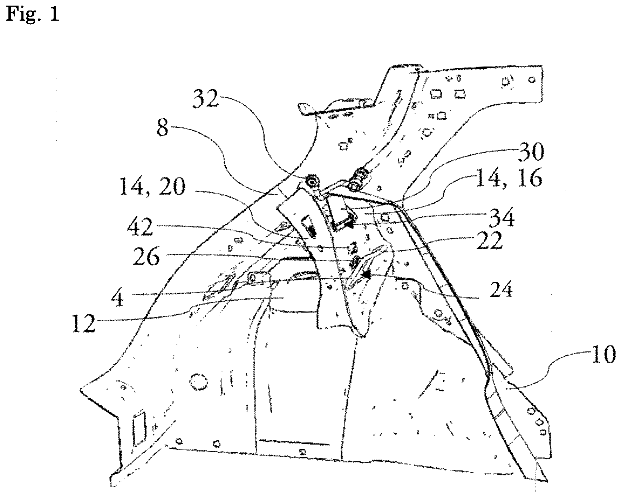

La figure 1 illustre une structure délimitant un habitacle de véhicule équipé d'un dispositif de support 1 conforme à l'invention, et elle illustre plus particulièrement une partie arrière de l'habitacle délimitée ici par un pied arrière 8 essentiellement vertical et une partie latérale communément appelée doublure de custode 10 et s'étendant verticalement et longitudinalement depuis le pied arrière 8. La figure 1 rend également visible une coupelle d'amortisseur 12.

Un support 14 est disposé sensiblement transversalement, en étant fixé, par exemple par des opérations de soudage, d'une part sur le pied arrière 8 et d'autre part sur la partie latérale 6.

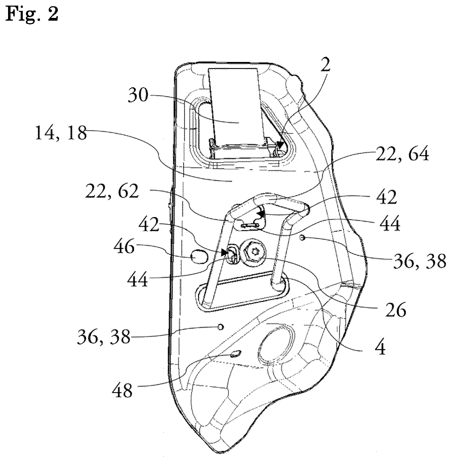

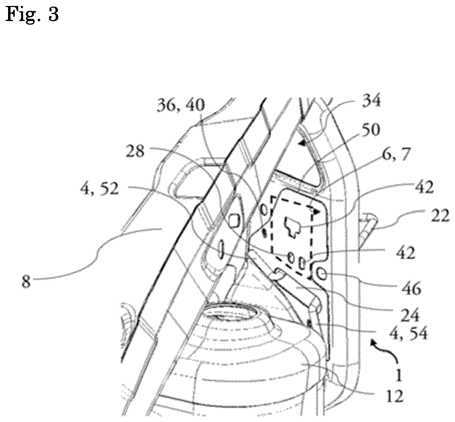

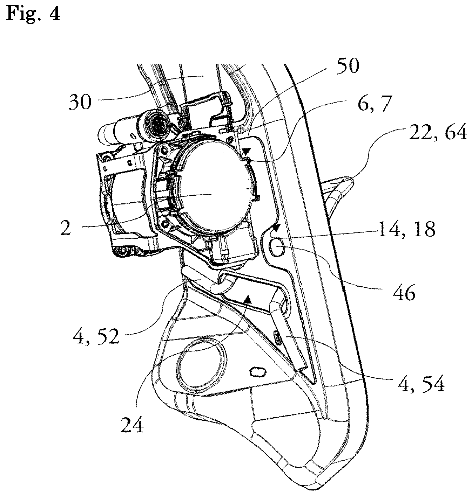

Le support 14 présente une première face 16 et une deuxième face 18 en opposition l'une de l'autre, et le support 14 est agencé de telle sorte que la première face 16 se trouve tournée vers l'avant du véhicule, de manière à se trouver en regard d'un siège ou d'une banquette arrière du véhicule, ici non représenté. Dans ce contexte, la deuxième face 18 du support 14 est tournée vers l'arrière du véhicule et elle est notamment en regard du pied arrière 8. La figure 1 et la figure 2 rendent visibles la première face 16, la deuxième face 18 étant rendue visible sur les figures 3 et 4.

Le cas échéant, le support 14 peut être fixé également sur la coupelle d'amortisseur, notamment via une face latérale 20 pouvant être formée par une pièce de support additionnel formant équerre avec le support 14.

Le dispositif de support 1 selon l'invention est configuré de telle sorte que l'enrouleur de ceinture 2, visible sur la figure 3, soit plaqué contre la deuxième face 18 et de telle sorte que le fil de gâche 4 soit fixé sur cette même deuxième face 18 du support 14, avec la plaque de renfort 6 visible sur la figure 2 qui est interposée entre chacun de ces composants et la deuxième face 18 du support 14.

Le fil de gâche 4 comprend une portion centrale d'accroche 22 qui s'étend en saillie de la première face 16 du support 14 de manière à pouvoir être accroché par un crochet de verrouillage solidaire d'un dossier d'un siège arrière, ou banquette arrière, du véhicule. Cette portion centrale d'accroche 22 du fil de gâche 4 présente plus particulièrement une forme de « U ».

Le fil de gâche comporte par ailleurs des doigts qui prolongent la portion centrale d'accroche et qui s'étendent en regard de la deuxième face 18 du support pour permettre la fixation du fil de gâche sur le dispositif de support 1. Dans ce contexte, le dispositif de support comporte une première fenêtre de passage 24 à travers laquelle le fil de gâche passe pour pouvoir disposer de la portion centrale d'accroche et des doigts de part et d'autre du dispositif de support.

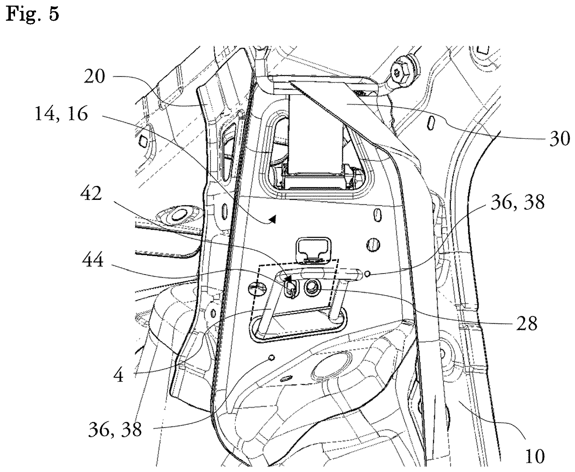

L'enrouleur de ceinture 2 est fixé au support 14 par une vis de fixation 26, traversant le dispositif de support 1, et plus particulièrement le support 14 et la plaque de renfort 6, via un orifice de fixation 28 visible sur la figure 5.

L'enrouleur de ceinture 2 est associée à une sangle de ceinture 30 qui s'étend dans l'habitacle via un élément de renvoi de ceinture 32 s'étendant à distance du dispositif de support et fixé sur le pied arrière ou la doublure de custode. La sangle de ceinture 30 est ainsi amené à traverser le dispositif de support via une deuxième fenêtre de passage 34 agencée dans l'épaisseur du dispositif de support, et plus particulièrement ici dans l'épaisseur du support 14 depuis la première face 16 jusqu'à la deuxième face 18.

On peut comprendre ici qu'une seule et unique pièce, à savoir le support 14, permet de positionner et fixer deux éléments distincts que sont l'enrouleur de ceinture 2 et le fil de gâche 4 dans une même zone. Cette capacité a pour avantage d'économiser le nombre de pièces nécessaires à la fixation des deux éléments qui requièrent habituellement deux pièces distinctes.

La plaque de renfort 6, non visible sur la figure 1, est fixée sur la deuxième face 18 du support 14, notamment par une opération de soudage et elle est interposée, tel qu'évoqué précédemment entre le support 14 et respectivement l'enrouleur de ceinture 2 et le fil de gâche 4. La plaque de renfort 6 a pour fonction de rigidifier la zone et d'éviter un arrachement de l'enrouleur de ceinture et/ou du fil de gâche en cas de choc provoqué par un accident de la route. Par ailleurs, la plaque de renfort 6 sert d'intermédiaire à la fixation du fil de gâche 4, celui-ci étant déjà soudé sur la plaque de renfort avant que l'ensemble ainsi formé soit soudé sur le dispositif de support. On comprend que l'on permet ainsi un réglage selon au moins une direction, notamment verticale, de la position de la portion d'accroche 22 du fil de gâche 4 par rapport à l'interface d'un dossier de siège pour coopérer avec un crochet de verrouillage du dossier en réalisant en usine des ajustements sur la position selon la même direction de la plaque de renfort par rapport au support. Ce réglage de position est ainsi simplifié dans la mesure où il est facilement mis en oeuvre par un montage glissant, par exemple par des rivets glissants, de la plaque de renfort sur le support, la position des deux et donc de l'ensemble du dispositif de support étant figée ensuite par soudage.

La figure 2 illustre le dispositif de support seul, vu depuis l'avant du véhicule. Plusieurs trous, orifices, ouvertures sont réalisés dans le dispositif de support, que ce soit au travers du support qu'au travers de la plaque de renfort pour permettre le positionnement de ces composants l'un par rapport à l'autre et le positionnement de l'enrouleur de ceinture et du fil de gâche.

Afin de positionner correctement la plaque de renfort 6 par rapport au support 14 avant l'opération de soudage, des trous de positionnement 36 formés dans l'épaisseur du dispositif de support 1 et traversant successivement la plaque de renfort 6 et le support 14 sont prévus, ici au nombre de deux sans que cela soit limitatif de l'invention. Ces trous de positionnement sont formés par la juxtaposition d'un premier trou de positionnement 38 formé à travers le support et visible sur la figure 2, et d'un deuxième trou de positionnement 40 formé à travers la plaque de renfort et visible sur la figure 3, au moins l'un de ces trous de positionnement étant de forme oblongue pour permettre d'ajuster, avant l'opération de soudage de la plaque de renfort 6 sur le support 14, la position de la plaque de renfort et du fil de gâche qu'elle porte par rapport au support. Notamment, cet ajustement permet de déplacer la position de la portion d'accroche 22 du fil de gâche 4 pour s'assurer qu'elle est à même de coopérer avec un crochet de verrouillage de l'élément d'assise du véhicule qu'elle doit participer à retenir.

La plaque de renfort 6 est ainsi positionnée contre le support 14 et des rivets glissants, ici non représentés, sont positionnés dans les trous de positionnement 36. Ces rivets glissants bloquent la plaque de renfort contre le support, selon une direction perpendiculaire au plan d'allongement du support, mais autorisent un ou plusieurs mouvements dans un plan parallèle au plan d'allongement du support. Ici, un degré de liberté vertical est donné à la plaque de renfort 6 et au fil de gâche 4 déjà soudé sur cette plaque de renfort 6 lorsque celle-ci est plaquée contre le support, et le trou de positionnement 40 de forme oblongue s'étend à cet effet principalement selon la direction verticale.

Le dispositif de support 1 comporte par ailleurs des orifices de positionnement 46 du support sur la caisse du véhicule. Ces orifices de positionnement 46 permettent d'amener le support sur la structure du véhicule et de le positionner de manière adéquate pour qu'il puisse y être soudé. Tel que cela est notamment visible sur la figure 3, ces orifices de positionnement 46 sont uniquement formés sur le support 14 et la plaque de renfort 6 peut être profilée pour éviter de venir en recouvrement de ces orifices de positionnement.

Le dispositif de support comporte par ailleurs au moins un orifice de pré-assemblage 42 qui traverse le support 14 et la plaque de renfort, et qui permet de positionner l'enrouleur de ceinture par rapport au dispositif de support avant de fixer la position par la vis de fixation 26 dans l'orifice de fixation. Tel que cela est visible sur la figure 2, l'enrouleur de ceinture comporte des crochets 44 aptes à venir s'engager dans les orifices de pré-assemblages 42 pour aider à maintenir en position cet enrouleur de ceinture le temps de l'opération de vissage.

Dans l'exemple illustré, le support 14 comporte par ailleurs un trou d'agrafe 48 en partie inférieure, notamment pour fixer une interface de câblage.

Les figures 3 et 4 illustrent en détails la position de la plaque de renfort 6 sur le support 14. Sur la figure 3, l'enrouleur de ceinture 2 a été retiré afin de rendre plus visible certains des trous et orifices précédemment évoqués, que comprennent le support 14 et la plaque de renfort 6 et l'emplacement de l'enrouleur de ceinture 2 selon l'invention est délimité par une zone en pointillés.

La plaque de renfort 6 comprend une première face, plaquée contre la deuxième face 18 du support 14, et une deuxième face 7, tournée vers l'arrière du véhicule et ici en regard du pied arrière 8. La plaque de renfort étant interposée entre l'enrouleur de ceinture 2 et le support, on comprend que l'enrouleur de ceinture est plaqué contre la deuxième face 7 de la plaque de renfort.

La plaque de renfort 6 comprend plusieurs types d'orifices, de fenêtres, d'ouvertures pour faire suite à ce qui a été évoqué précédemment. La plaque de renfort 6 comprend ainsi une première fenêtre de passage participant à former la première fenêtre de passage du dispositif de support pour le fil de gâche 4.

Tel qu'évoqué, la plaque de renfort 6 comprend également des deuxièmes trous de positionnement 40, ici de forme oblongue, qui sont destinés à être superposés aux premiers trous de positionnement 38 présents sur le support 14 pour former les trous de positionnement 36 du dispositif de support 1.

La plaque de renfort 6 comprend également un orifice de fixation et des orifices de pré-assemblage, participant à former respectivement l'orifice de fixation 28 et les orifices de pré-assemblage 42 du dispositif de support 1 pour la fixation de l'enrouleur de ceinture 2 sur le dispositif de support 1.

Il est notable que la plaque de renfort 6 présente une dimension verticale nécessaire pour être interposée entre d'une part l'enrouleur de ceinture 2 et le support 14 et d'autre part les doigts du fil de gâche 4 et le support, mais qu'elle n'a pas pour vocation à s'étendre sur toute la hauteur du support 14. Ainsi, tel que visible sur les figures 3 et 4, la plaque de renfort 6 présente un bord d'extrémité supérieure 50 qui s'étend entre l'orifice de fixation et les orifices de pré-assemblage, réalisés conjointement sur le support et la plaque de renfort, d'une part et la deuxième fenêtre de passage, réalisé sur le support seul, d'autre part.

Les figures 3 et 4 rendent également visibles la caractéristique selon laquelle le fil de gâche 4 s'étend de part et d'autre du dispositif de support 1, avec l'extrémité de la portion centrale d'accroche visible du côté de la première face 16 du support et avec les deux doigts 52, 54 prolongeant la portion centrale d'accroche 22 qui s'étendent du côté de la deuxième face 18 du support 14.

Les doigts 52, 54 sont soudés sur la deuxième face 7 de la plaque de renfort 6 afin de maintenir le fil de gâche 4 en place par rapport au dispositif de support 1. Les doigts 52, 54 prolongent sensiblement perpendiculairement la portion centrale d'accroche 22 et s'étendent sur une distance de l'ordre de 54 à 50mm pour générer une surface de soudage suffisamment grande pour assurer une tenue du fil de gâche contre l'arrachement. Les doigts 52, 54 ne sont pas alignés l'un par rapport à l'autre de manière à absorber des efforts exercés sur le fil de gâche selon plusieurs directions. Par ailleurs, cette disposition permet d'assurer un contact des doigts avec le dispositif de support sur une même distance d'un doigt à l'autre, ce qui permet une répartition homogène des efforts sur chacun des doigts et ce dans un encombrement réduit du dispositif de support.

Enfin, la figures 3 et 4 rendent visible une forme générale de la plaque de renfort 6 avec un bord d'extrémité supérieure 50 sensiblement droit, ici transversal, une première portion sensiblement carrée qui est destinée à recevoir l'enrouleur de ceinture et une deuxième portion qui épouse la forme inférieure du support pour pouvoir servir de support de soudure aux doigts de fixation du fil de gâche. Il est notable qu'une plaque de renfort 6 de même forme peut être retournée, avec cette fois la deuxième face de la plaque de renfort qui est plaquée contre le support. On standardise ainsi la forme la plaque de renfort et une même pièce peut être indifféremment positionné contre un support soudé à des éléments de structure du côté gauche du véhicule ou contre un support soudé à des éléments de structure du côté droit du véhicule.

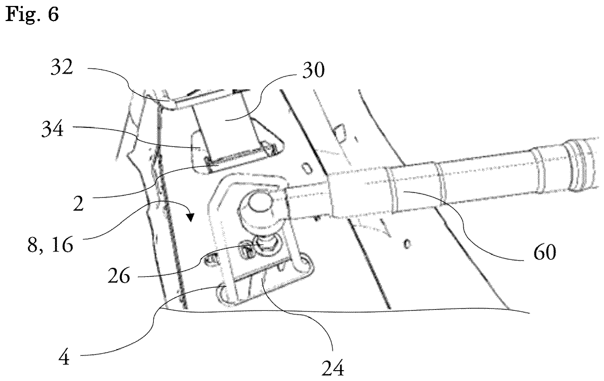

Les figures 5 et 6 illustrent des étapes du procédé d'assemblage et rendent notamment visible une caractéristique de l'invention selon laquelle le fil de gâche 4 et sa portion centrale d'accroche 22 sont configurés pour ne pas gêner l'accès à la vis de fixation de l'enrouleur de ceinture sur le dispositif de support. Cette caractéristique est ici nécessaire du fait de la disposition sur un même support 14 et une même plaque de renfort 6, donc dans un encombrement réduit, des deux composants que sont le fil de gâche 4 et l'enrouleur de ceinture 2.

Plus particulièrement, l'enrouleur de ceinture et le fil de gâche sont agencés sur le dispositif de support de telle sorte que la vis de fixation 26 soit située au sein d'une zone formée par la projection orthogonale de la portion centrale d'accroche 22 sur la première face 16 du support 14 et représentée en traits pointillés sur la figure 5. Ceci est notamment rendu possible par un décalage vertical entre différentes parties du fil de gâche. Tel qu'évoqué, la portion centrale d'accroche 22 présente une forme en U, avec deux branches 62 dans le prolongement direct des doigts 52, 54 et une base transversale 64 qui relie les deux branches et est destiné à coopérer avec le crochet de verrouillage du siège ou de la banquette arrière. Le décalage vertical précédemment évoqué est à considérer entre les doigts 52, 54 et la base transversale, et il est réalisé par l'inclinaison particulière des branches.

La figure 5 illustre une étape préalable du procédé d'assemblage, dans laquelle le dispositif de support est fixé sur la structure du véhicule, et notamment sur le pied arrière 8 et la doublure de custode 10. La plaque de renfort 6 est déjà soudée sur la deuxième face 18 du support, non visibles sur l'angle de vue de la figure 5. La plaque de renfort 6 a pour cela été placée en regard du support 14 et positionnée via les trous de positionnement 36 et des rivets glissants, la plaque de renfort étant ensuite soudée sur le support 14 après qu'une étape de réglage de la position du fil de gâche ait été effectuée.

Tel que cela a pu être évoqué, le fil de gâche 4 est déjà soudé sur la plaque de renfort 6 lorsque cette dernière est plaquée contre le support. Plus particulièrement, les doigts 52, 54 du fil de gâche 4 sont dans une étape initiale soudés à la deuxième face 7 de la plaque de renfort 6. Dans un deuxième temps, on positionne la plaque de renfort 6 contre le support, et notamment la première face de la plaque de renfort contre la deuxième face 18 du support, en insérant la portion centrale d'accroche 22 du fil de gâche 4, soudé à la plaque de renfort 6 au niveau de la deuxième face de cette plaque de renfort, dans la première fenêtre de passage 24 du support. Ensuite, la position verticale de la portion centrale d'accroche du fil de gâche 4 est ajustée pour pouvoir assurer sa fonction de verrouillage du dossier de siège, notamment par un déplacement par rapport au support. Ce déplacement est ici simplifié en ce qu'il est effectué par un montage glissant de la plaque de renfort contre le support, via des rivets glissants montés dans les trous de positionnement. Lorsque la position du fil de gâche, et de la plaque de renfort formant un intermédiaire pour le réglage de la position, est correcte, cette position est figée par rapport au support en soudant la plaque de renfort sur le support.

Également sur la figure 5, l'enrouleur de ceinture 2 est préassemblé sur le dispositif de support 1 avec les crochets 44 qui sont engagés dans les orifices de pré-assemblage 42 formés aussi bien dans le support 14 que dans la plaque de renfort 6 et correctement juxtaposés lors du positionnement de la plaque de renfort par rapport au support. La position de la sangle, notamment par rapport à l'élément de renvoi de ceinture 32, est ajustée, et l'enrouleur de ceinture peut être fixé définitivement. Un écrou solidaire de l'enrouleur de ceinture est positionné en regard de l'orifice de fixation 28, du côté de la deuxième face 18 du support.

La figure 6 illustre l'opération finale du procédé d'assemblage avec le serrage de la vis de fixation via une visseuse 60. Du fait de la caractéristique précédemment évoquée selon laquelle le fil de gâche est agencé spécifiquement à cet effet, la tête de cette visseuse 60 peut passer à l'intérieur de la portion centrale d'accroche 22 pour accéder à la vis de fixation 26.

Telle qu'elle vient d'être décrite, la présente invention atteint bien les buts qu'elle s'est fixés, à savoir permettre la fixation d'un enrouleur de ceinture et d'un fil de gâche associés à un siège arrière de véhicule dans un encombrement restreint, en prévoyant un dispositif support unique pour chacun de ces deux éléments. Le dispositif de support selon l'invention permet ainsi un gain de pièces mécaniques tout en assurant la tenue aux chocs de l'enrouleur de ceinture et du fil de gâche.

La présente invention ne saurait toutefois se limiter aux moyens et configurations décrits et illustrés ici et elle s'étend également à tout moyen et toute configuration équivalente ainsi qu'à toute combinaison techniquement opérante de tels moyens.

## Revendications

1. Dispositif de support (1) pour un enrouleur de ceinture (2) d'un véhicule automobile, comprenant un support (14) configuré pour être fixé à la structure du véhicule et une plaque de renfort (6) fixée sur le support (14), la plaque de renfort (6) étant configurée pour assurer la fixation de l'enrouleur de ceinture (2) et d'un fil de gâche (4).

2. Dispositif de support (1) selon la revendication précédente, **caractérisé en ce que** la plaque de renfort (6) comprend une première face, plaquée contre une face (18) du support (14), et une deuxième face (7) opposée à la première face, l'enrouleur de ceinture (2) étant plaquée contre la deuxième face (7) et le fil de gâche (4) étant fixé sur cette deuxième face (7) de la plaque de renfort (6).

3. Dispositif de support (1) selon l'une des revendications précédentes, **caractérisé en ce que** la plaque de renfort (6) et le support (14) comprennent tous deux une première fenêtre de passage (24) pour le passage du fil de gâche (4).

4. Dispositif de support (1) selon l'une des revendications précédentes, **caractérisé en ce que** le fil de gâche (4) comprend d'une part une portion centrale d'accroche (22) d'un élément d'assise du véhicule, s'étendant d'un côté du support (14), et d'autre part des portions de fixation au dispositif de support formée par des doigts (52, 54) prolongeant la portion centrale d'accroche (22) et s'étendant de l'autre côté du support (14).

5. Dispositif de support (1) selon l'une des revendications précédentes, **caractérisé en ce que** la plaque de renfort (6) est soudée sur le support (14), la plaque de renfort (6) et le support (14) comportant des trous de positionnement (36, 38, 40) configurés pour recevoir des rivets glissants.

6. Dispositif de support (1) selon l'une des revendications précédentes, **caractérisé en ce que** le support (14) et la plaque de renfort (6) comportent chacun un orifice de fixation (28) permettant le passage d'une vis de fixation (26) de l'enrouleur de ceinture (2).

7. Dispositif de support (1) selon la revendication précédente, **caractérisé en ce que** l'orifice de fixation (28) est disposé à l'intérieur d'une projection orthogonale du fil de gâche (4) sur une face (16) du support (14).

8. Dispositif de support (1) selon l'une des revendications précédentes, caractérisé en ce le support (14) comprend une deuxième fenêtre de passage (34) configurée pour laisser passer une sangle (30) associée à l'enrouleur de ceinture (2).

9. Dispositif de support (1) selon l'une des revendications précédentes, **caractérisé en ce que** la plaque de renfort (6) présente une épaisseur équivalente à l'épaisseur du support (14).

10. Véhicule automobile comprenant au moins un dispositif de support (1) selon l'une des revendications précédentes.

11. Procédé de montage dans un véhicule automobile d'un dispositif de support (1) selon l'une quelconque des revendications 1 à 9, comprenant au moins les étapes suivantes parmi lesquelles une étape de soudage de doigts (52, 54) du fil de gâche (4) sur une première face de la plaque de renfort (6), une étape de positionnement de la deuxième face opposée de la plaque de renfort (6) contre une face du support (18) au cours de laquelle le fil de gâche (4) est passé à travers une première fenêtre de passage formée sur le support (14), une étape de réglage de la position du fil de gâche (4) par ajustement glissant de la position de la plaque de renfort contre le support, une étape de fixation de la plaque de renfort (6) sur le support (14) par soudage et une étape de fixation par vissage de l'enrouleur de ceinture (2) sur le dispositif de support (1).
